# EUROPEAN PATENT APPLICATION

(11) **EP 4 350 931 A1**
(43) Date of publication of application: **10.04.2024**
(21) Application number: 22306492.4
(22) Date of filing: 05.10.2022
(51) Int. Cl.: H02J 7/00, H02M 3/07, G05F 1/62, H02M 1/00, H01M 10/42

(54) **A CHARGE PUMP CONTROL SYSTEM**

(71) Applicant: NXP USA, Inc., Austin TX 78735 (US)
(72) Inventor: Bertrand, Simon, 31023 Toulouse (FR); Bosvieux, Tristan, 31023 Toulouse (FR); Flouron, Yves, 31023 Toulouse (FR)
(74) Representative: Schmütz, Christian Klaus Johannes

(57) **Abstract**

A charge pump control system (618) for a battery management system, wherein: the battery management system comprises: a plurality of cell-balancing-switches, one for each of a plurality of battery cells, wherein each cell-balancing-switch is in parallel with a respective one of the battery cells; a plurality of switch-drivers, one for each of the cell-balancing-switches, wherein each switch-driver is for providing a drive signal to selectively close a respective one of the cell-balancing-switches; and a charge pump (605) that is configured to provide an output voltage (606) to each of the plurality of switch-drivers. The charge pump (605) is operable at a switching frequency that sets the maximum output current. The charge pump control system (618) is configured to set the switching frequency of the charge pump (605) based on the number of switch-drivers that are providing their respective cell-balancing-switches with a drive signal to close the cell-balancing-switch.

## Description

### Field

The present disclosure relates to charge pump control systems, and in particular to charge pump control systems for battery management systems (BMSs).

### Summary

According to a first aspect of the present disclosure there is provided a charge pump control system for a battery management system, wherein:
the battery management system comprises:
a plurality of cell-balancing-switches, one for each of a plurality of battery cells, wherein each cell-balancing-switch is in parallel with a respective one of the battery cells;
a plurality of switch-drivers, one for each of the cell-balancing-switches, wherein each switch-driver is for providing a drive signal to selectively close a respective one of the cell-balancing-switches; and
a charge pump that is configured to provide an output voltage to each of the plurality of switch-drivers, wherein the charge pump is operable at a switching frequency that sets the maximum output current;
wherein the charge pump control system is configured to set the switching frequency of the charge pump based on the number of switch-drivers that are providing their respective cell-balancing-switches with a drive signal to close the cell-balancing-switch.

Advantageously, such a charge pump control system can reduce the consumption of the charge pump by changing the charge pump switching frequency while maintaining the charge pump output voltage ripple close to a specification, whatever the load.

In one or more embodiments, the charge pump control system comprises:
a controller that is configured to set the switching frequency of the charge pump based on the number of switch drivers that are providing their respective cell-balancing-switches with a drive signal to close the cell-balancing-switch.

In one or more embodiments, the controller is configured to use a look-up table or database to determine the required switching frequency for a given number of switch drivers that are providing their respective cell-balancing-switches with a drive signal to close the cell-balancing-switch.

In one or more embodiments, the charge pump control system is configured to determine the amplitude of ripple in the output voltage that is provided by the charge pump and set the switching frequency of the charge pump based on the determined amplitude of the ripple.

In one or more embodiments, the charge pump control system is configured to:
receive a clock-signal from a clock;
provide a clock-adjustment-signal based on the number of switch drivers that are providing their respective cell-balancing-switches with a drive signal to close the cell-balancing-switch;
modify the frequency of the clock-signal based on the clock-adjustment-signal in order to provide a charge-pump-clock-signal; and
provide the charge-pump-clock-signal to the charge pump in order to set the switching frequency of the charge pump.

In one or more embodiments, the charge pump control system is configured to provide the clock-adjustment-signal based on the level of ripple in the output voltage provided by the charge pump.

In one or more embodiments, the charge pump control system is configured to provide the clock-adjustment-signal by looking up a value for the clock-adjustment-signal in a look-up table based on the number of switch drivers that are providing their respective cell-balancing-switches with a drive signal to close the cell-balancing-switch.

In one or more embodiments, the charge pump control system is configured to modify the frequency of the clock-signal in order to provide the charge-pump-clock-signal by:
determining a frequency-factor based on the clock-adjustment-signal; and
multiplying the clock-signal by the frequency-factor.

In one or more embodiments, the charge pump control system is configured to set the frequency of a charge-pump-clock-signal by:
setting an operational parameter of a clock that provides a charge-pump-clock-signal based on the number of switch-drivers that are providing their respective cell-balancing-switches with a drive signal to close the cell-balancing-switch.

In one or more embodiments, the charge pump control system further comprises:
a DC output voltage loop for setting the output voltage of the charge pump to a constant value by regulating the current through a flying capacitor in the charge pump.

There is also disclosed an integrated circuit comprising any charge pump control system disclosed herein.

There is also disclosed a battery management system comprising any charge pump control system disclosed herein.

According to a further aspect of the present disclosure there is provided a method of controlling a charge pump control system for a battery management system, wherein:
the battery management system comprises:
   a plurality of cell-balancing-switches, one for each of a plurality of battery cells, wherein each cell-balancing-switch is in parallel with a respective one of the battery cells;
   a plurality of switch-drivers, one for each of the cell-balancing-switches, wherein each switch-driver is for providing a drive signal to selectively close a respective one of the cell-balancing-switches;
a charge pump that is configured to provide an output voltage to each of the plurality of switch-drivers, wherein the charge pump is operable at a switching frequency that sets the maximum output current;
wherein the method comprises:
setting the switching frequency of the charge pump based on the number of switch-drivers that are providing their respective cell-balancing-switches with a drive signal to close the cell-balancing-switch.

In one or more embodiments, setting the switching frequency of the charge pump comprises using a look-up table or database to determine the required switching frequency for a given number of switch drivers that are providing their respective cell-balancing-switches with a drive signal to close the cell-balancing-switch.

In one or more embodiments, setting the switching frequency of the charge pump comprises:
determining the amplitude of ripple in the output voltage that is provided by the charge pump; and
setting the switching frequency of the charge pump based on the determined amplitude of the ripple.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 illustrates a battery management system (BMS);
Figure 2 shows a plot of the level of ripple in the output voltage provided by the charge pump versus the number of cells being balanced for a charge pump that is operated at a fixed switching frequency;
Figure 3 shows a plot of the (constant) switching frequency of the charge pump and a plot of the level of ripple voltage in the output voltage provided by the charge pump, versus the number of cells being balanced;
Figure 4 shows another plot that illustrates that the current drawn on the charge pump decreases as the number of cell balancing stages that are operating decreases;
Figure 5 shows a charge pump for providing an output voltage to each of a plurality of switch-drivers;
Figure 6 shows a charge pump for providing an output voltage to each of a plurality of switch-drivers, along with a charge pump control system according to an embodiment of the present disclosure;
Figure 7 shows a charge pump for providing an output voltage to each of a plurality of switch-drivers, along with a charge pump control system according to another embodiment of the present disclosure;
Figure 8 shows plots of the operation of a charge pump that is controlled by the charge pump control system of Figures 6 or 7;
Figure 9 shows a comparison between the current consumption of a charge pump that does not use a charge pump control system of Figures 6 or 7, and one that does;
Figure 10 shows a plot of the percentage improvements in charge pump current consumption that is achieved by using the charge pump control system of Figures 6 and 7; and
Figure 11 illustrates schematically a method of controlling a charge pump control system for a BMS according to an embodiment of the present disclosure.

### Detailed Description

When using a cell balancing feature in BMS (battery management system) applications, a charge pump can be used to supply drivers of cell balancing switches (one for each cell). In this case the current load of the charge pump depends on the number of cells balanced. Moreover, BMS applications can require that the BMS consumption on the battery stack is as low as possible, especially in cyclic mode when the main source of consumption is the cell balancing.

As will be discussed below, the charge pump can be optimized to supply the maximum number of drivers (current load / ripple / current consumption). If the charge pump is supplying fewer drivers (when fewer cells are balanced) than the maximum, then the charge pump is no longer optimized because the current load is smaller than its maximum capability. This causes unnecessary overconsumption.

Examples that will be disclosed herein can improve performance of the charge pump in terms of current consumption, whatever number of cells are being supplied by the charge pump.

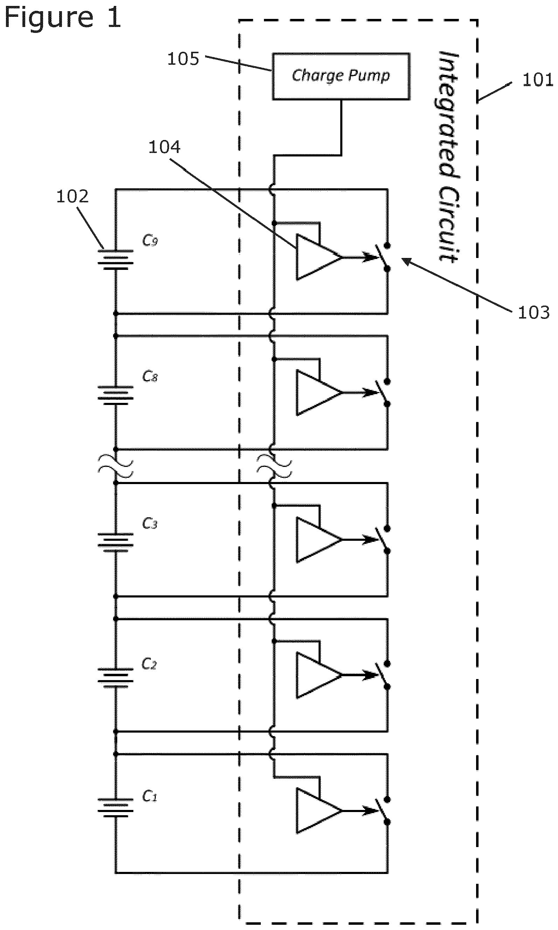

Figure 1 illustrates a battery management system (BMS) 101, which in this example is implemented on an integrated circuit (IC). The BMS 101 is shown connected to nine battery cells 102. As is known in the art, the battery cells 102 are connected in series to provide a stack of battery cells.

The BMS 101 includes a plurality of cell-balancing-switches 103, one for each of the plurality of battery cells 102. These cell-balancing-switches 103 can be implemented as PMOS MOSFETs in some examples. Each cell-balancing-switch 103 is in parallel with a respective one of the battery cells 102. The BMS 101 also includes a plurality of switch-drivers 104, one for each of the cell-balancing-switches 103. Each switch-driver 104 is for providing a drive signal to selectively close a respective one of the cell-balancing-switches 103. In order to optimize cell load, a cell balancing procedure can be applied in which each battery cell 102 can be discharged with the cell-balancing-switch 103. When a switch-driver 104 is providing its respective cell-balancing-switch 103 with a drive signal to close the cell-balancing-switch 103, it consumes a current (for example, *Iload_CB*=30µA (where *Iload_CB* is the current drawn by the switch-driver 104 when it is controlling the associated cell-balancing-switch 103 for cell balancing).

As is known in the art, the BMS 101 also includes bleed resistors in parallel with each battery call 102 such that closing a cell-balancing-switch 103 does not short the battery call 102. These bleed resistors are not shown in Figure 1 to simplify the illustration of the components of the BMS 101 that are key to the present disclosure.

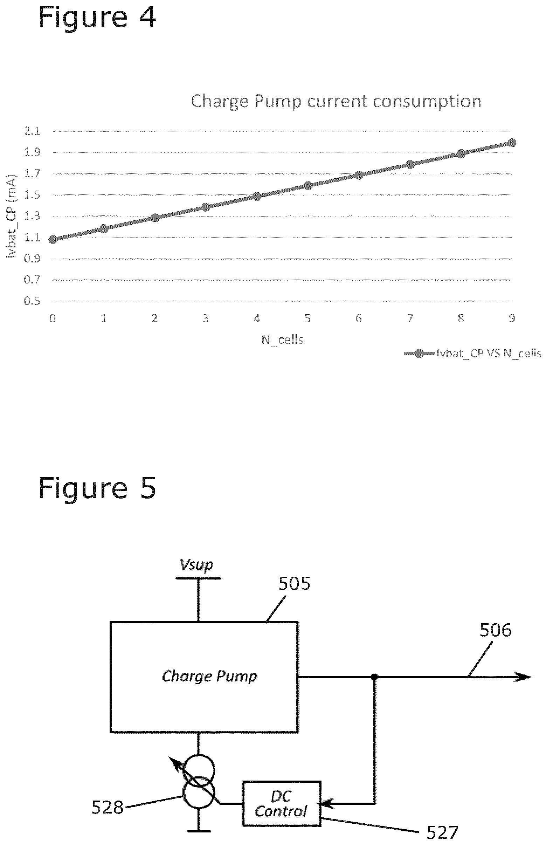

The BMS 101 also includes a charge pump 105 that is configured to provide an output voltage to each of the plurality of switch-drivers 104. The charge pump 105 senses the output voltage and adjusts a current source that charges a flying capacitor, as will be discussed in more detail with reference to Figure 5. The charge pump 105 is operable at a switching frequency that sets the maximum output current. The switching frequency also has an impact on the level of ripple in the voltage at the output of the charge pump 105. The level of this ripple is constant for a static load, as is the case in the present application. The charge pump 105 can operate at a switching frequency (e.g. *CP_freq*=10.8 MHz) that is designed to deliver maximum current (e.g. *Iload_CP = N_cells × Iload_CB*) with a maximum acceptable ripple voltage (*Vripple_max_CP=*150mV). The current consumption of the charge pump 105 is *Ivbat_CP.*

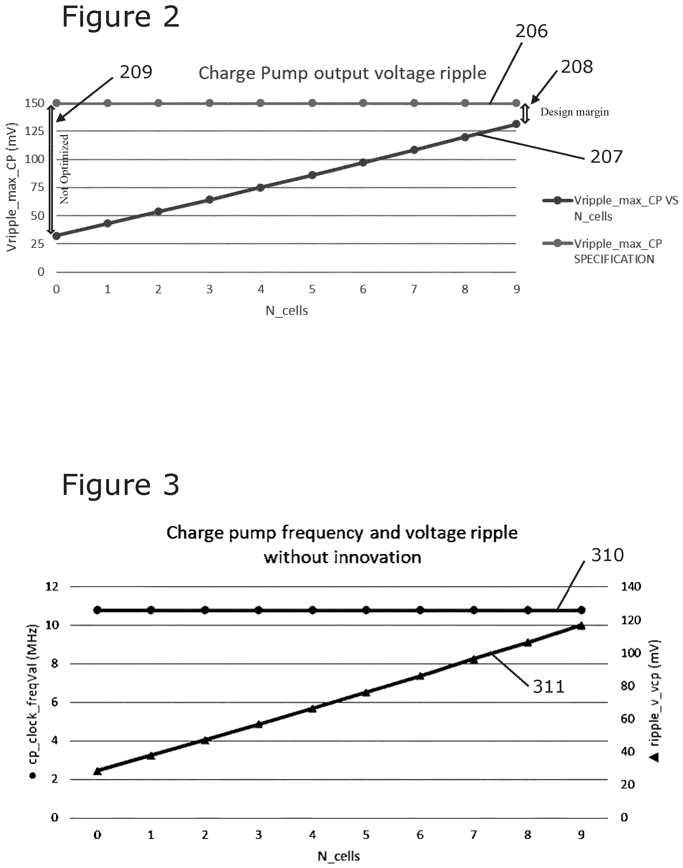

Figure 2 shows a plot 207 of the level of ripple in the output voltage provided by the charge pump (on the vertical axis) versus the number of cells being balanced (on the horizontal axis) for a charge pump that is operated at a fixed switching frequency.

The charge pump that is represented by the plot of Figure 2 is designed for the following requirements:
- Switching frequency: *CP_freq*=10.8 MHz
- Maximum current load: *Iload_CP = N_cells × Iload_CB* = 270uA
- Maximum acceptable ripple voltage: *Vripple_max_CP*= 150mV

The maximum acceptable ripple voltage is also plotted in Figure 2 as line 206. It can be seen that the charge pump is running at a fixed frequency and designed to meet the 150mV ripple specification at the maximum current load *(Iload_CP = N_cells × Iload_CB* = 9 x 30uA = 270uA) when all nine cells are being balanced (taking into account a design margin 208). When fewer cells are being balanced, the charge pump output voltage ripple decreases (as shown by line 207 in Figure 2) such that the operation of the charge pump is not optimized for the target ripple voltage.

Figure 3 shows: a plot 310 of the switching frequency of the charge pump (to illustrate that it is kept constant in this illustration); and a plot 311 of the level of ripple voltage in the output voltage provided by the charge pump, versus the number of cells being balanced (on the horizontal axis).

It can be seen from Figure 3 that when fewer cell balancing stages are operating, since the charge pump switching frequency is fixed, the charge pump output voltage ripple 311 decreases.

Figure 4 shows another plot that illustrates that the current drawn on the charge pump (on the vertical axis) decreases as the number of cell balancing stages that are operating decreases.

It will be appreciated from Figures 2 and 3 that the simulated architecture is not optimized when driving fewer than the maximum number of cells for cell balancing. The size of the ripple is far from the specification and this unnecessarily increases the charge pump current consumption.

Examples of the present disclosure that will be described below can advantageously reduce the consumption of the charge pump by changing the charge pump switching frequency while maintaining the charge pump output voltage ripple close to the specification, whatever the load.

Figure 5 shows a charge pump 505 for providing an output voltage 506 to each of a plurality of switch-drivers (not shown in Figure 5).

In Figure 5, a DC output voltage loop is provided for setting the output voltage 506 of the charge pump 505 to a constant value (or an almost constant value, in that it tends towards a predetermined value) by regulating the current through a flying capacitor in the charge pump. In other words, if the current drawn on the charge pump output increases, the output voltage will tend to decrease. This is detected by a DC control block 507 in Figure 5, which causes the current provided to the charge pump 505 by a variable current source 528 to increase, thereby implementing a regulation loop that causes the flying capacitor charge current to be increased. In this way, the charge pump 505 of Figure 5 is operated such that its DC output voltage is constant whatever the current drawn at its output by regulating its flying capacitor current charge.

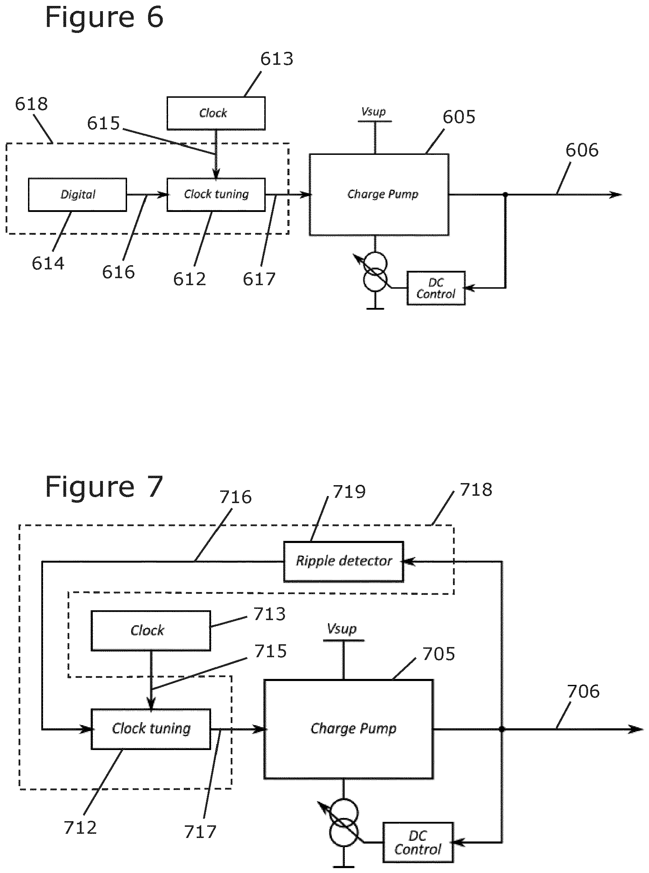

Figure 6 shows a charge pump 605 for providing an output voltage 606 to each of a plurality of switch-drivers (not shown in Figure 6), along with a charge pump control system 618 according to an embodiment of the present disclosure.

The charge pump control system 618 can set the switching frequency of the charge pump 605 based on the number of switch-drivers that are providing their respective cell-balancing-switches with a drive signal to close the cell-balancing-switch. In this way, the charge pump control system 618 can set the switching / working frequency of the charge pump 605 for each load configuration (e.g. *N_cells [0 to 9]* x Iload_CB = [0 to 270uA]) to provide acceptable current consumption versus maximum ripple of the charge pump 605 in all cases.

In this example, the charge pump control system 618 includes a controller (specifically a digital controller 614 in this implementation) that is configured to set the switching frequency of the charge pump 605 based on the number of switch drivers that are providing their respective cell-balancing-switches with a drive signal to close the cell-balancing-switch. In Figure 6, the switching frequency of the charge pump 605 is set by an open loop. The digital controller 614 can determine the number of cells that are to be balanced (for example: because the digital controller 614 provides the control signals to the switch-drivers to close the associated cell-balancing-switches; or because the digital controller 614 has access to computer memory that stores an identifier of the number of cells that are to be balanced), and can then set the switching frequency of the charge pump 605 in order to decrease the consumption of the charge pump 605 whilst still achieving an acceptable ripple voltage.

In one implementation, the digital controller 614 can use a look-up table or database to determine the required switching frequency for a given number of cells that are being balanced.

In this way, the charge pump control system 618 in Figure 6 can set the switching / working frequency of the charge pump 605 for each load configuration (e.g. N_cells [0 to 9] x Iload_CB = [0 to 270uA]). In some implementations, the switching / working frequencies that will be used for each load configuration can be set for a specific BMS at manufacture. That is, optimum switching frequencies for a given part and for a given N_cell system can slightly differ from part to part. Therefore, the optimum switching frequencies can be determined at the time of manufacture so that they can subsequently be used by the charge pump control system 618.

As shown in Figure 6, the charge pump control system 618 receives a clock-signal 615 from a clock 613. The clock 613 may be part of the charge pump control system 618, it may be part of the BMS, or it may be provided as part of a different system. The charge pump control system 618 also includes a clock tuning block 612.

The digital controller 614 of the charge pump control system 618 in this implementation provide a clock-adjustment-signal 616 based on the number of switch drivers that are providing their respective cell-balancing-switches with a drive signal to close the cell-balancing-switch. For example by using a look-up table as indicated above. The clock tuning block 612 modifies the frequency of the clock-signal 615 based on the clock-adjustment-signal 616 in order to provide a charge-pump-clock-signal 617. For instance, the clock tuning block 612 can modify the frequency of the clock-signal 615 in order to provide the charge-pump-clock-signal 617 by determining a frequency-factor based on the clock-adjustment-signal 616 and multiplying the clock-signal 615 by the frequency-factor. In which case, the clock tuning block 612 can be implemented as a simple frequency multiplier or divider. The charge pump control system 618 can then provide the charge-pump-clock-signal 617 to the charge pump 605 in order to set the switching frequency of the charge pump 605.

In an alternative embodiment, the charge pump control system can set an operational parameter of a clock that (directly) provides a charge-pump-clock-signal based on the number of switch-drivers that are providing their respective cell-balancing-switches with a drive signal to close the cell-balancing-switch. In this way, the clock-signal that is directly provided by a clock can be adjusted, as opposed to modifying the (fixed) clock-signal that is provided by a clock as is the case in Figure 6.

Figure 7 shows a charge pump 705 for providing an output voltage 706 to each of a plurality of switch-drivers (not shown in Figure 7), along with a charge pump control system 718 according to another embodiment of the present disclosure.

In this example, the charge pump control system 718 determines the amplitude of the ripple in the output voltage 706 that is provided by the charge pump 705 and set the switching frequency of the charge pump 705 based on the determined amplitude of the ripple.

In the implementation of Figure 7, the charge pump control system 718 includes a ripple detector 719 and a clock tuning block 712. A clock 713, which provides a clock-signal 715 to the charge pump control system 718, is also shown in Figure 7.

The ripple detector 719 monitors the output voltage 706 that is provided by the charge pump 705. The ripple detector 719 provides a clock-adjustment-signal 716 at its output, which has a value that is proportional to the size of the ripple in the output voltage 706. This clock-adjustment-signal 716 (which can be considered as a feedback signal) is provided to the clock tuning block 712.

In this example, the ripple detector 719 compares the size of the detected ripple voltage with at least two threshold values: a lower-threshold-value that represents a minimum acceptable value for the ripple voltage; and an upper-threshold-value that represents a maximum acceptable value for the ripple voltage. If the detected ripple voltage is not between the lower-threshold-value and the upper-threshold-value, then the ripple detector 719 sets the clock-adjustment-signal 716 such that the switching frequency of the charge pump 705 will either be increased or decreased such that the ripple voltage will move closer to it's acceptable range of values and ultimately to a value that is within the ripple amplitude range that is defined by the upper-threshold-value and the lower-threshold-value.

Alternatively, the functionality of comparing the size of the detected ripple voltage with the at least two threshold values can be performed by the clock tuning block 712.

In the same way that is described above with reference to Figure 6, the clock tuning block 712 provides a charge-pump-clock-signal 717 that has a frequency that is a function of a base clock (the clock-signal 715) combined with the feedback signal (the clock-adjustment-signal 716). Consequently, the frequency of the clock signal that supplies the charge pump 705 is tuned according to the feedback signal generated by the ripple detector 719. Therefore, a clock frequency control loop is provided by the example of Figure 7.

The charge pump control systems of Figure 6 and Figure 7 do not interfere with the DC output voltage loop that is described with reference to Figure 5 because the DC output voltage loop can be considered as a relatively fast loop that maintains the DC output voltage at a constant value. In contrast, the charge pump control systems of Figure 6 and Figure 7 can be considered as implementing much slower control of the charge pump because the number of cells that are being balanced typically changes infrequently. For example, there could be anything from the order of minutes or hours between a change in the number of cells being balanced. This "slow loop" is that slow due to the particular load behaviour, so that it behaves more or less as a slow sequence of DC currents. So after a load change the frequency and hence the ripple may be sub-optimal for only a short time, but after that short time it reaches the right set point. Then the charge pump provides the output voltage (Vout) via the DC control loop that is described with reference to Figure 5, at a frequency set point where the ripple voltage is an acceptable level due to the charge pump control system of Figure 6 or Figure 7.

In some examples, the DC output voltage loop that is described with reference to Figure 5 can be considered part of any of the charge pump control systems that are described herein.

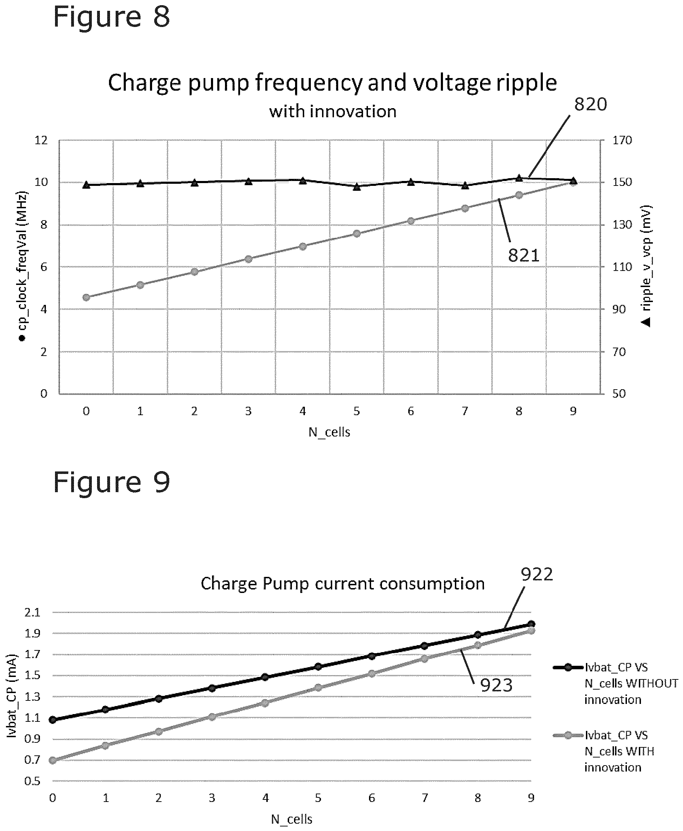

Figure 8 shows plots 820, 821 of the operation of a charge pump that is controlled by the charge pump control system of Figures 6 or 7. Figure 8 shows: a plot 821 of the switching frequency of the charge pump; and a plot 820 of the level of ripple voltage in the output voltage provided by the charge pump, versus the number of cells being balanced (on the horizontal axis).

In contrast with Figure 3, it can be seen from Figure 8 that the ripple voltage 820 is substantially constant irrespective of the number of cells being balanced. Whereas, the switching frequency 821 reduces as the number of cells being balanced reduces.

Figure 9 shows a comparison between the current consumption of a charge pump that does not use a charge pump control system of Figures 6 or 7, and one that does. A first plot 922 in Figure 9 shows current consumption of a charge pump that does not use a charge pump control system of Figures 6 or 7. The first plot 922 is the same as the plot that is shown in Figure 4. A second plot 923 in Figure 9 shows current consumption of a charge pump that does use a charge pump control system of Figures 6 or 7. It can be seen from Figure 9 that the charge pump current consumption benefits from the decreased switching frequency that is enabled by the charge pump control system of Figures 6 and 7.

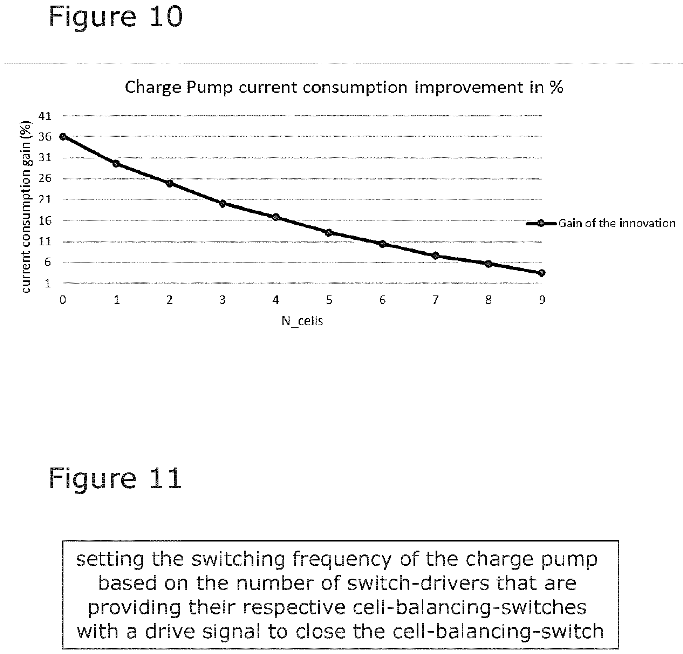

Figure 10 shows a plot of the percentage improvements in charge pump current consumption that is achieved by using the charge pump control system of Figures 6 and 7.

Figure 11 illustrates schematically a method of controlling a charge pump control system for a BMS according to an embodiment of the present disclosure. Features of such a BMS are described in detail above.

The method includes the step of setting the switching frequency of the charge pump based on the number of switch-drivers that are providing their respective cell-balancing-switches with a drive signal to close the cell-balancing-switch. As discussed above, controlling the charge pump in this way can advantageously improve the efficiency of the charge pump and reduce it's current consumption.

Examples disclosed herein adapt the switching frequency of the charge pump. In one implementation, a predefined table of the switching frequency required for each number of balanced cells is used. In another implementation, a ripple detector is used to automatically adapt the switching frequency of the charge pump.

A control loop is provided in some implementations that adapts the charge pump switching frequency according to the ripple observed at the charge pump output that supplies the cell balancing stages. Decreasing the charge pump frequency with the number of active cell balancing stages such as to maintain constant the charge pump output ripple results in significant savings to current consumption.

Examples disclosed herein provide an improvement of the power consumption of a charge pump supplying cells balancing feature on BMS applications. Such examples can employ a strategy of adapting the frequency of the internal clock to fit the number of cells managed by the cells balancing feature.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A charge pump control system for a battery management system, wherein:
the battery management system comprises:
a plurality of cell-balancing-switches, one for each of a plurality of battery cells, wherein each cell-balancing-switch is in parallel with a respective one of the battery cells;
a plurality of switch-drivers, one for each of the cell-balancing-switches, wherein each switch-driver is for providing a drive signal to selectively close a respective one of the cell-balancing-switches; and
a charge pump that is configured to provide an output voltage to each of the plurality of switch-drivers, wherein the charge pump is operable at a switching frequency that sets the maximum output current;
wherein the charge pump control system is configured to set the switching frequency of the charge pump based on the number of switch-drivers that are providing their respective cell-balancing-switches with a drive signal to close the cell-balancing-switch.

2. The charge pump control system of claim 1, wherein the charge pump control system comprises:
a controller that is configured to set the switching frequency of the charge pump based on the number of switch drivers that are providing their respective cell-balancing-switches with a drive signal to close the cell-balancing-switch.

3. The charge pump control system of claim 2, wherein the controller is configured to use a look-up table or database to determine the required switching frequency for a given number of switch drivers that are providing their respective cell-balancing-switches with a drive signal to close the cell-balancing-switch.

4. The charge pump control system of claim 1, wherein the charge pump control system is configured to determine the amplitude of ripple in the output voltage that is provided by the charge pump and set the switching frequency of the charge pump based on the determined amplitude of the ripple.

5. The charge pump control system of claim 1, wherein the charge pump control system is configured to:
receive a clock-signal from a clock;
provide a clock-adjustment-signal based on the number of switch drivers that are providing their respective cell-balancing-switches with a drive signal to close the cell-balancing-switch;
modify the frequency of the clock-signal based on the clock-adjustment-signal in order to provide a charge-pump-clock-signal; and
provide the charge-pump-clock-signal to the charge pump in order to set the switching frequency of the charge pump.

6. The charge pump control system of claim 5, wherein the charge pump control system is configured to provide the clock-adjustment-signal based on the level of ripple in the output voltage provided by the charge pump.

7. The charge pump control system of claim 5, wherein the charge pump control system is configured to provide the clock-adjustment-signal by looking up a value for the clock-adjustment-signal in a look-up table based on the number of switch drivers that are providing their respective cell-balancing-switches with a drive signal to close the cell-balancing-switch.

8. The charge pump control system of any one of claims 5 to 7, wherein the charge pump control system is configured to modify the frequency of the clock-signal in order to provide the charge-pump-clock-signal by:
determining a frequency-factor based on the clock-adjustment-signal; and
multiplying the clock-signal by the frequency-factor.

9. The charge pump control system of any one of claims 5 to 7, wherein the charge pump control system is configured to set the frequency of a charge-pump-clock-signal by:
setting an operational parameter of a clock that provides a charge-pump-clock-signal based on the number of switch-drivers that are providing their respective cell-balancing-switches with a drive signal to close the cell-balancing-switch.

10. The charge pump control system of any preceding claim, wherein the charge pump control system further comprises:
a DC output voltage loop for setting the output voltage of the charge pump to a constant value by regulating the current through a flying capacitor in the charge pump.

11. An integrated circuit comprising the charge pump control system of any preceding claim.

12. A battery management system comprising the charge pump control system of any preceding claim.

13. A method of controlling a charge pump control system for a battery management system, wherein:
the battery management system comprises:
a plurality of cell-balancing-switches, one for each of a plurality of battery cells, wherein each cell-balancing-switch is in parallel with a respective one of the battery cells;
a plurality of switch-drivers, one for each of the cell-balancing-switches, wherein each switch-driver is for providing a drive signal to selectively close a respective one of the cell-balancing-switches;
a charge pump that is configured to provide an output voltage to each of the plurality of switch-drivers, wherein the charge pump is operable at a switching frequency that sets the maximum output current;
wherein the method comprises:
setting the switching frequency of the charge pump based on the number of switch-drivers that are providing their respective cell-balancing-switches with a drive signal to close the cell-balancing-switch.

14. The method of claim 13, wherein setting the switching frequency of the charge pump comprises using a look-up table or database to determine the required switching frequency for a given number of switch drivers that are providing their respective cell-balancing-switches with a drive signal to close the cell-balancing-switch.

15. The method of claim 13, wherein setting the switching frequency of the charge pump comprises:
determining the amplitude of ripple in the output voltage that is provided by the charge pump; and
setting the switching frequency of the charge pump based on the determined amplitude of the ripple.

## Amended claims

### Amended claims in accordance with Rule 137(2) EPC.

1. A battery management system (101) comprising a charge pump control system (618; 718), wherein:
the battery management system comprises:
a plurality of cell-balancing-switches (103), one for each of a plurality of battery cells (102), wherein each cell-balancing-switch is in parallel with a respective one of the battery cells;
a plurality of switch-drivers (104), one for each of the cell-balancing-switches (102), wherein each switch-driver (104) is for providing a drive signal to selectively close a respective one of the cell-balancing-switches (103); and
a charge pump (105; 605; 705) that is configured to provide an output voltage (606; 706) to each of the plurality of switch-drivers (104), wherein the charge pump (105; 605; 705) is operable at a switching frequency that sets the maximum output current; and
**characterised in that** the charge pump control system (618; 718) is configured to set the switching frequency of the charge pump (105; 605; 705) based on the number of switch-drivers (104) that are providing their respective cell-balancing-switches (103) with a drive signal to close the cell-balancing-switch (103).

2. The battery management system of claim 1, wherein the charge pump control system comprises:
a controller that is configured to set the switching frequency of the charge pump using an open loop based on the number of switch drivers that are providing their respective cell-balancing-switches with a drive signal to close the cell-balancing-switch.

3. The battery management system of claim 2, wherein the controller is configured to use a look-up table or database to determine the required switching frequency for a given number of switch drivers that are providing their respective cell-balancing-switches with a drive signal to close the cell-balancing-switch.

4. The battery management system of claim 1, wherein the charge pump control system is configured to determine the amplitude of ripple in the output voltage that is provided by the charge pump and set the switching frequency of the charge pump based on the determined amplitude of the ripple.

5. The battery management system of claim 1, wherein the charge pump control system is configured to:
receive a clock-signal from a clock;
provide a clock-adjustment-signal based on the number of switch drivers that are providing their respective cell-balancing-switches with a drive signal to close the cell-balancing-switch;
modify the frequency of the clock-signal based on the clock-adjustment-signal in order to provide a charge-pump-clock-signal; and
provide the charge-pump-clock-signal to the charge pump in order to set the switching frequency of the charge pump.

6. The battery management system of claim 5, wherein the charge pump control system is configured to provide the clock-adjustment-signal based on the level of ripple in the output voltage provided by the charge pump.

7. The battery management system of claim 5, wherein the charge pump control system is configured to provide the clock-adjustment-signal by looking up a value for the clock-adjustment-signal in a look-up table based on the number of switch drivers that are providing their respective cell-balancing-switches with a drive signal to close the cell-balancing-switch.

8. The battery management system of any one of claims 5 to 7, wherein the charge pump control system is configured to modify the frequency of the clock-signal in order to provide the charge-pump-clock-signal by:
determining a frequency-factor based on the clock-adjustment-signal; and
multiplying the clock-signal by the frequency-factor.

9. The battery management system of any one of claims 1 to 4, wherein the charge pump control system is configured to set the switching frequency of the charge pump by:
setting an operational parameter of a clock that provides a charge-pump-clock-signal based on the number of switch-drivers that are providing their respective cell-balancing-switches with a drive signal to close the cell-balancing-switch.

10. The battery management system of any preceding claim, wherein the charge pump control system further comprises:
a DC output voltage loop for setting the output voltage of the charge pump to a constant value by regulating the current through a flying capacitor in the charge pump.

11. The battery management system of any preceding claim, wherein the charge pump control system is provided as an integrated circuit.

12. A method of controlling a battery management system, wherein:
the battery management system comprises:
a plurality of cell-balancing-switches, one for each of a plurality of battery cells, wherein each cell-balancing-switch is in parallel with a respective one of the battery cells;
a plurality of switch-drivers, one for each of the cell-balancing-switches, wherein each switch-driver is for providing a drive signal to selectively close a respective one of the cell-balancing-switches;
a charge pump that is configured to provide an output voltage to each of the plurality of switch-drivers, wherein the charge pump is operable at a switching frequency that sets the maximum output current;
**characterised in that** the method comprises:
setting the switching frequency of the charge pump based on the number of switch-drivers that are providing their respective cell-balancing-switches with a drive signal to close the cell-balancing-switch.

13. The method of claim 12, wherein setting the switching frequency of the charge pump comprises using a look-up table or database to determine the required switching frequency for a given number of switch drivers that are providing their respective cell-balancing-switches with a drive signal to close the cell-balancing-switch.

14. The method of claim 12, wherein setting the switching frequency of the charge pump comprises:
determining the amplitude of ripple in the output voltage that is provided by the charge pump; and
setting the switching frequency of the charge pump based on the determined amplitude of the ripple.
